# EUROPEAN PATENT SPECIFICATION

(11) **EP 3 373 275 B1**
(45) Date of publication and mention of the grant of the patent: **06.01.2021**
(21) Application number: 16862316.3
(22) Date of filing: 20.10.2016
(51) Int. Cl.: G09B 23/28

(54) **CARDIOPULMONARY RESUSCITATION TRAINING MANNEQUIN**
TRAININGSVORRICHTUNG FÜR HERZ-LUNGEN-WIEDERBELEBUNG
MANNEQUIN D'APPRENTISSAGE DE RÉANIMATION CARDIO-PULMONAIRE

(30) Priority: 04.11.2015 KR 20150154484
(43) Date of publication of application: 12.09.2018
(73) Proprietor: BESTCPR CO., LTD., Hwaseong-si, Gyeonggi-do 18326 (KR)
(72) Inventor: KIM, Gi Chang, Goyang-si Gyeonggi-do 10219 (KR); RHEE, Joong Eui, Yongin-si Gyeonggi-do 16822 (KR); CHO, Gyu Chong, Seoul 05501 (KR)
(74) Representative: Zech, Stefan Markus
(86) International application number: PCT/KR2016/011781
(87) International publication number: WO 2017/078300

(56) References cited:
- WO-A1-2012/047504
- KR-A- 20110 096 730
- KR-A- 20120 053 727
- KR-B1- 100 887 375
- KR-B1- 101 267 384
- US-A1- 2010 291 522
- US-A1- 2012 329 022

## Description

### Technical field

The present disclosure relates to a mannequin for cardiopulmonary resuscitation training. More specifically, the present disclosure relates to a mannequin for cardiopulmonary resuscitation training in which a magnet is installed at a distal end of a pivoting arm that pivots up and down inside a mannequin body, two sensors are installed at different heights of two columns such that the position of the pivoting arm is detected, and a behavior of cardiopulmonary resuscitation as performed by trainee is analyzed, and, thus, whether the trainee is performing cardiopulmonary resuscitation in accordance with the regulations is figured out.

### Related art

Cardiopulmonary resuscitation is a procedure that resuscitates and restores cardiopulmonary function when cardiopulmonary function is seriously degraded or stopped. Normally, for respiratory dysfunction or respiratory arrest, the operator secures airway, performs artificial respiration, and performs heart massage to restore heart function.

Artificial respiration is performed when the heart is running but breathing is stopped in an event of falling into the water, poisoning or bleeding, in order to revitalize the function of the lungs such that breathing is maintained normally. The artificial respiration as the first life-saving treatment includes a breathing-in method of blowing an exhalation of an operator into the lungs of a patient, and an artificial respiration with hand pressure in which a practitioner presses a chest of a patient by using a hand to cause inhale and exhale of the patient. The general breathing-in method involves a mouth-to-mouth method that expands the patient's lungs with air infused through the mouth to the patient.

Further, cardiopulmonary resuscitation is used to revitalize cardiac function when a patient's heart stops beating due to falls, electric shocks, or poisoning. Cardiopulmonary resuscitation is a closed chest cardiac massage in which the operator compresses the heart by pressing the breast bone down three to five times toward the vertebrae to increase cardiac output. It usually refers to heart massage.

In cardiopulmonary resuscitation, the operator first secures the patient's airway and checks for breathing. If breathing is stopped, the operator performs artificial respiration. If the heart is at rest, the operator begins heart massage while continuing to ventilate. Since such CPR is performed on the human body, it is difficult for the operator or the trainee to repeatedly practice the above-described procedure.

Recently, devices for practicing artificial respiration and cardiopulmonary resuscitation using a mannequin shaped like a human body have been disclosed.

In US 2012/0329022 A1, a chest compression training assembly, specifically a magnetic clicker assembly for producing an audible feedback during the training of chest compression is disclosed. Further, WO 2012/047504 A1 discloses a system that provides computer controlled interactive instruction and testing methodologies. The system enables one or more users to be trained and/or tested using a plurality of mannequins including circuitry and hardware that enable each users compressions to analyzed for rate, depth and recoil to ensure that each user is performing the chest compressions properly.

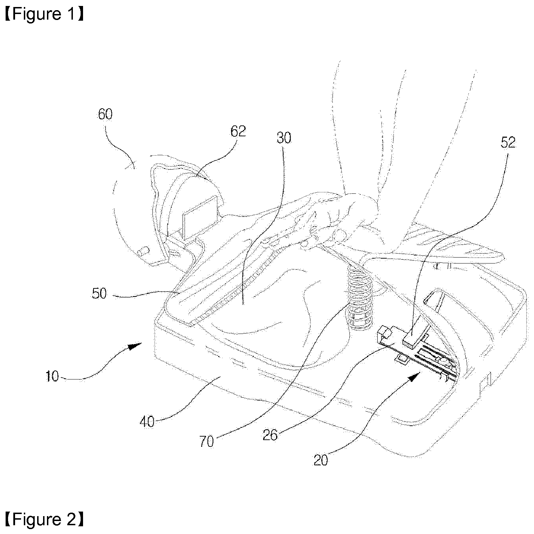

FIG. 1 is a perspective view showing the structure of a mannequin for training according to the prior art.

As shown in Figure 1, the training mannequin comprises a mannequin body 10 in the shape of a human chest and head, a cardiopulmonary resuscitation checking unit 20 installed inside the mannequin body 10, wherein the cardiopulmonary resuscitation checking unit 20 generates a certain confirmation sound when the chest is pressed to inform the successful implementation of cardiopulmonary resuscitation training, and an air bag 30 representing a lung organ of the human body.

The mannequin body 10 includes a back plate 40 representing the shape of the back, a chest plate 50 representing the shape of the chest, and a head 60 representing the shape of the head. The back plate 40 has a predetermined space for accommodating therein the cardiopulmonary resuscitation checking unit 20 and the air bag 30. The plate is in the form of a cabinet with an open front. The chest plate 50 is in the form of a plate having a predetermined width so as to open and close the back plate 40. The head 60 is coupled to an upper end of the back plate 40. A pivoting unit 62 having a shape of a human's jaw is installed at a lower front end of the head 60. The pivoting unit 62 may pivot up and down.

Between the back plate 40 and the chest plate 50, a compression spring 70 is provided so that the chest plate 50 has elasticity with respect to an external force. Therefore, when the chest plate 50 is pressed inward, the chest plate 50 moves inwardly while receiving a constant resistance from the compression spring 70. A stopper protrudes upward from a bottom of the back plate 40.

The cardiopulmonary resuscitation checking unit 20 includes a leaf spring having a convex portion at one side and a support bracket 26 for supporting the leaf spring.

The support bracket 26 is spaced apart from the back plate 40 by a predetermined distance. The leaf spring is installed at a position corresponding to the stopper. The convex portion of the leaf spring is provided so as to face the stopper so that the cardiopulmonary resuscitation checking unit 20 makes a sound when the stopper collides with the stopper.

Further, in the chest plate 50, a pressing portion 52 for pressing the leaf spring is provided at a position corresponding to the stopper and the leaf spring. Therefore, when the chest plate 50 is pressed, the pressing portion 52 presses the plate spring, and a sound is generated.

In the case of cardiopulmonary resuscitation using the above-described mannequin 10, when the trainee presses the chest plate 50 of the mannequin 10 with a strong force, a proper compression is confirmed via the sound generation. However, if the position of the leaf springs is changed, or if the mannequin 10 is used for a long time, the sound may be poor or the sound may be too small, so that the trainee or the instructor may not notice successful operation.

### SUMMARY

The present disclosure provides a mannequin for cardiopulmonary resuscitation training in which two pivot shafts are installed parallel to each other at the neck joint connecting the torso and head, to allow the mannequin to move in a similar manner to a person's neck movement.
In one aspect, there is provided a mannequin device for cardiopulmonary resuscitation training, the device comprising: a torso case 102 having an open top and an inner space defined therein; a torso cover 104 constructed to cover the open top of the torso case 102; a head case 106 connected to the torso case 102, wherein the head case has an inner space defined therein and an open top; a head cover 108 constructed to cover the open top of the head case 106; a spring 110 installed on an inner bottom face of the torso case 102 to exert an elastic force to the torso cover to lift the torso cover 104 upward; a first column 112 installed on the inner bottom face of the torso case 102, wherein the first column is provided with a first sensor 112a for sensing a magnetic force; a second column 114 installed on the inner bottom face of the torso case 102, wherein the second column is provided with a second sensor 114a for sensing a magnetic force, wherein the second sensor 114a is installed at a lower height than the first sensor 112a; a pivoting arm 118 installed on the inner bottom face of the torso case 102, wherein the arm 118 has a distal end pivoting in a reciprocating manner in a vertical direction, wherein the arm 118 has a magnet 118a installed at the distal end thereof; and a display 122 installed in the head, wherein the display 122 is configured to display one or more of letters, numbers, and graphics, or to change color, brightness, size, and display area of at least one of the characters, numbers, and graphics, wherein the magnet 118a pivots in a reciprocating manner in a vertical direction by a certain angle between the first column 112 and the second column 114, wherein each of the first sensor 112a and the second sensor 114a is configured to detect a magnetic force when the magnet 118a pivots up and down, wherein the display 122 includes: a depth display 122a indicative of a minimum depth to be depressed during cardiac compression; and a count display 122b indicating a press-rate or count per unit time of currently performed cardiac compressions.

In one embodiment, the device further comprises a neck-joint 120 connecting the torso case 102 and the head case 106 with each other, wherein the neck-joint 120 is pivotably mounted about a first pivot-shaft 120a and a second pivot-shaft 120b, wherein the neck-joint 120 is pivotable with respect to the torso case 102 about the first pivot-shaft 120a, wherein the neck-joint 120 is pivotable with respect to the head case 106 about the second pivot-shaft 120b.

In one embodiment, the device further comprises a control unit, wherein when, during pivoting movement of the pivoting arm 118 via pressing of the torso cover, the magnet 118a is lowered down and then passes by the first sensor 112a and the second sensor 114a and then move upwards again and then pass by the first sensor 112a, the control unit determines that the pressing operation is normal and indicates on the display 122 that the pressure operation is normal.

According to the present disclosure, when cardiopulmonary resuscitation is performed, it is possible for the user to easily and accurately determine how deeply the user is pressing the device. As a result, trainees who learn cardiopulmonary resuscitation can do accurate training.

### BRIEF DESCRIPTION OF THE DRAWINGS

Figure 1 is a perspective view showing the structure of mannequin for training according to the prior art.
Figure 2 is a perspective view showing the structure of mannequin according to the embodiment of the present disclosure.
Figure 3 shows an exploded perspective view of the mannequin of Figure 2 with the cover being removed.
Figure 4 is a perspective view showing the installation of the pivoting arm.
Figure 5 is a side view showing the installation of the pivoting arm.
Figures 6 to 8 are side views showing the sensing state of the sensor according to the position of the pivoting arm.
Figure 9 is a side view showing the connection of the neck-joint.
Figures 10 and 11 are side views of head position changes with pivoting movement of the neck-joint.
Figure 12 is a perspective view showing the structure of the extension formed on the left side of the body.
Figure 13 is a conceptual diagram showing the structure of the head-mounted display.

**Reference numerals**

| | |
|---|---|
| 100 : mannequin | 102 : torso case |
| 104 : torso cover | 104a : extension |
| 106 : head case | 108 : head cover |
| 110 : spring | 112 : first column |
| 112a : first sensor | 114 : second column |
| 114a : second sensor | 116 : pivot-shaft support |
| 118 : pivoting arm | 118a : magnet |
| 120 : neck-joint | 120a : first pivot-shaft |
| 120b : second pivot-shaft | 122 : display |
| 122a : depth display | 122b : count display |
| 124 : power switch | 126 : audio switch |
| 128 : speaker | 130 : press-rate display button |

### DETAILED DESCRIPTIONS

Hereinafter, referring to the drawings, "mannequin for cardiopulmonary resuscitation training" (hereinafter referred to as "mannequin") according to the embodiment of the present disclosure will be described.

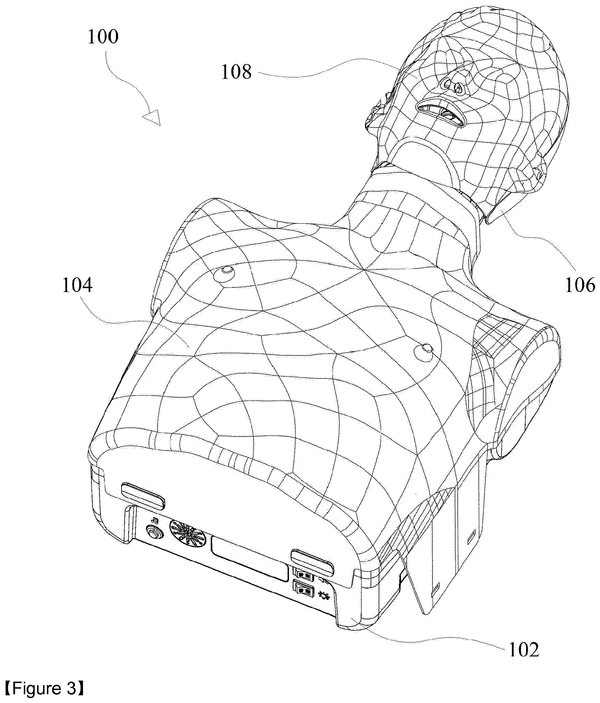

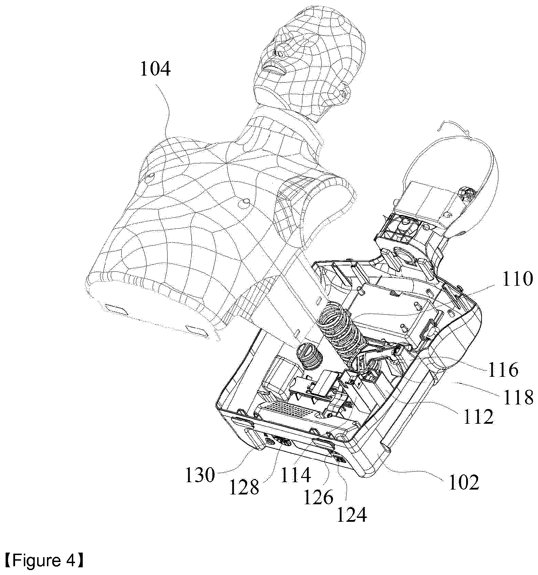

Figure 2 is a perspective view showing the structure of mannequin according to the embodiment of the present disclosure. Figure 3 shows an exploded perspective view of the mannequin of Figure 2 with the cover being removed.

The mannequin 100 according to the present disclosure is similar to the upper body of a man. The mannequin 100 includes torso and head, and provides an environment for practicing cardiac compression and artificial respiration performed for cardiopulmonary resuscitation.

An empty space is formed inside the torso and head. Devices for confirming the operation of cardiopulmonary resuscitation are installed in the empty space.

The torso has a torso case 102 forming a back of the upper body and having a certain receiving space defined therein and having an open top face, and a torso cover 104 covering the open top face of the torso case 102 and having the front shape of the human upper body.

The head also has a head case 106 and a head cover 108 in a similar manner to the torso, and a display and other devices are installed in the space inside the head.

The head cover 108 covers the open top of the head case 106 and is made in a similar shape to the frontal appearance of a human face.

The torso and head are connected to the neck-joint 120 and are pivoted with each other by a certain angle. The pivot movement of the head is preferably the same as that of the human body.

A spring 110 is installed on the inner bottom face of the torso case 102. In accordance with the present disclosure, a coil-shaped spring 110 is shown as being used, but the invention is not so limited. Other types of elastic bodies may be used as long as they exhibit elasticity. The spring 110 pushes the torso cover 104 upward to return to its original position during heart compression. The spring 110 is preferably located at the center of the torso case 102.

On one side of the inner bottom face of the torso case 102, two columns, which are defined as first column 112 and second column 114, respectively are disposed. The first column 112 is provided with a first sensor 112a, and the second column 114 is provided with a second sensor 114a. Each of the first sensor 112a and the second sensor 114a is a magnetic force measurement sensor. Each sensor senses the proximity of a magnet for generating a magnetic field and transmits a detection signal to a control unit (not shown).

According to the present disclosure, the first sensor 112a and the second sensor 114a have the same type and sense the same characteristic (magnetic force). The installation heights of the first sensor 112a and the second sensor 114a are different from each other. For convenience, the first sensor 112a installed on the first column 112 is installed at a higher level than the second sensor 114a installed on the second column 114. The present invention is not limited thereto.

On the other side of the inner bottom face of the torso case 102, a pivot-shaft support 116 is installed. The pivot shaft is inserted into the upper end of the pivot-shaft support 116.

Further, a proximal end of a pivoting arm 118 pivoting at a constant angle is pivotally mounted on the pivot-shaft inserted in the pivot-shaft support 116. The distal end of the pivoting arm 118 pivots together with the upward and downward movement of the torso cover 104.

At the distal end of the pivoting arm 118, a means for generating a magnetic force is provided. The means is generally implemented as a magnet 118a.

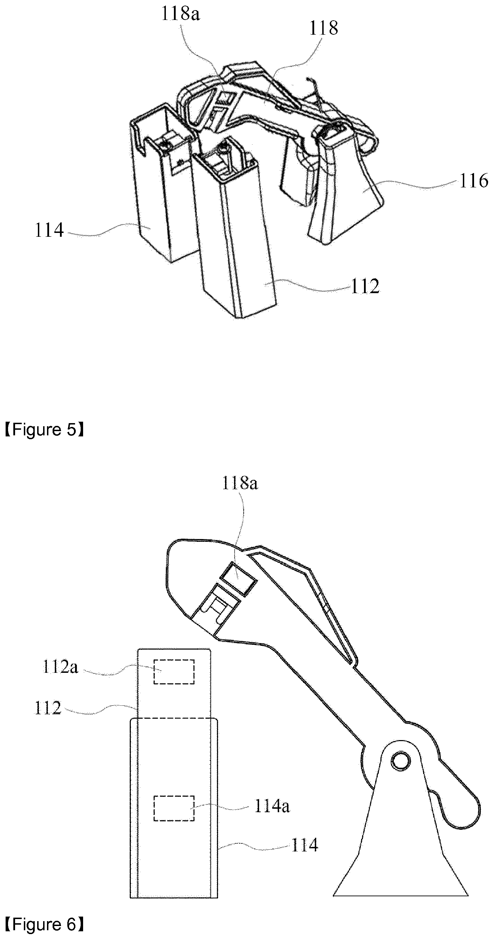

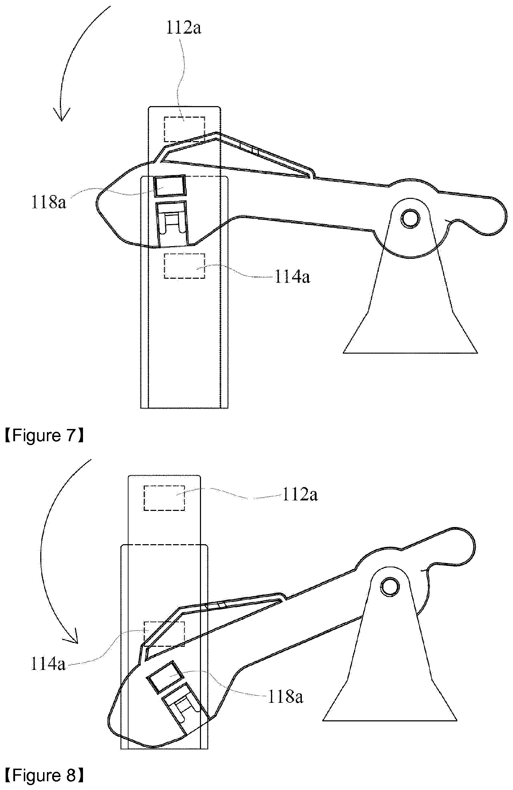

Figure 4 is a perspective view showing the installation of the pivoting arm. Figure 5 is a side view showing the installation of the pivoting arm. Figures 6 to 8 are side views showing the sensing state of the sensor according to the position of the pivoting arm.

The pivoting arm 118 is pivotally mounted about the pivot shaft that is installed in the pivot-shaft support 116 and extends parallel to the ground. The top face of the distal end of the pivoting arm 118 is in contact with or near the inner face of the torso cover 104 in the absence of any force. Accordingly, when the trainee strongly presses the torso cover 104, the distal end of the pivoting arm 118 pivots downward.

The distal end of the pivoting arm 118 pivots in a reciprocating manner between the first column 112 and the second column 114, which are installed parallel to each other. As shown in Figures 4 and 5, when the pivoting arm 118 pivots in a reciprocating fashion between two columns, the magnet 118a pivots between the first sensor 112a and the second sensor 114a in a reciprocating manner.

The first sensor 112a and the second sensor 114a sense the magnetic force emitted from the reciprocating magnet 118a, thereby confirming the position of the magnet 118a. Since the position of the magnet 118a is the same as the position of the distal end of the pivoting arm 118, the control unit can grasp the height of the pivoting arm 118.

As shown in FIG. 6, when the pivoting arm 118 pivots downward and the magnet 118a passes down by the first sensor 112a and falls to the middle height between the first sensor 112a and the second sensor 114a, the magnetic force of the magnet 118a sensed by the first sensor 112a gradually decreases from the maximum value, while the second sensor 114a detects the weak magnetic force. In this case, the controller can determine that the magnet 118a is at a height between the first sensor 112a and the second sensor 114a. In other words, it may be determined that while the trainee is performing cardiac compression, the cardiac pressure depth has not yet reached its lowest point.

When the trainee adds pressure and, as shown in Figure 7, the pivoting arm 118 pivots further down, a maximum magnetic force is sensed at the second sensor 114a. At this time, the controller judges that the depth of the pressing at this time is sufficient.

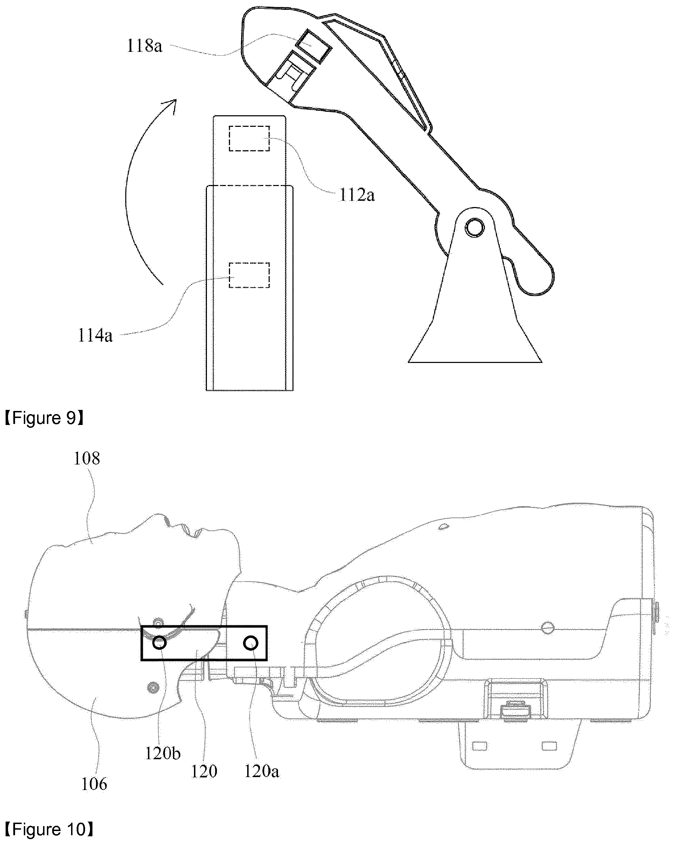

When the trainee removes the pressure that presses the torso cover 104, the torso cover 104 returns to its original height by the elastic force of the spring 110. In this process, the pivoting arm 118 also pivots upwards. As shown in FIG. 8, the magnet 118a ascends with passing by the second sensor 114a and the first sensor 112a in this order. In this case, the control unit may check the magnetic force sensed by the second sensor 114a and the magnetic force sensed by the first sensor 112a, thereby determining that the pivoting arm 118 has returned to its original height.

This process corresponds to one pressure count in CPR.

If the first sensor 112a detects the force and the force then disappears after the magnetic force is sensed only by the first sensor 112a and before the magnetic force is sensed by the second sensor 114a, it may be seen that the pivoting arm 118 has risen before falling down sufficiently.

In general, cardiac compression depth in cardiopulmonary resuscitation should be at least 5 cm deep. If the height difference between the first sensor 112a and the second sensor 114a is set to about 5 cm, it may be seen that sufficient pressure is applied when magnetic force is normally detected from both the first sensor 112a and the second sensor 114a.

The mannequin 100 outputs a voice guidance indicating that the compression depth is not sufficient when the pressure is not sufficiently applied to reach the depth where the second sensor 114a is located.

Further, the first sensor 112a and the second sensor 114a sequentially detect the magnetic force and the sensed magnetic force disappears, and then the second sensor 114a senses the magnetic force again, and, then, the sensed magnetic force disappears.

Once again, the second sensor 114a senses the magnetic force and the sensed magnetic force disappears. The control unit may consider this as an event that the pivoting arm 118 goes down again without reaching the height of the first sensor 112a.

The pressure degree of the heart should normally be sufficient to pressure the heart and relieve-pressure the heart for the circulation of blood. The release of pressure may be determined by checking that the pivoting arm 118 has been raised up sufficiently.

That is, when the magnet 118a descending downward comes back up and then passes by the first sensor 112a, it is determined that the pressure release is sufficient. If not, it is judged that the release of pressure is not enough. The device may send a warning about this.

At this time, the trainee may be informed of the quality of his/her pressing action by the device outputting a voice guidance informing that the relaxation of the pressure is not sufficient.

In conclusion, sufficient compression to reach the normal depth and subsequent sufficient release are achieved when, first, magnetic force detection of the first sensor and subsequent sensed magnetic force disappearance, second, magnetic force detection of the second sensor and subsequent sensed magnetic force disappearance, and, third, magnetic force detection of the second sensor and subsequent sensed magnetic force disappearance, and, fourth, magnetic force detection of the first sensor and subsequent sensed magnetic force disappearance occur in this order.

Further, the control unit may calculate how many normal presses per unit time are being performed by measuring the time or the press-rate with which the magnetic field is detected. When the calculated count of presses per unit time is normal and when the count of presses is abnormal, the trainee may be notified of such normal and abnormal cases via the image or voice.

In general, the normal compression rate is 90 to 130 times per minute. 100 to 110 times per minute is known to be the most ideal pressing rate.

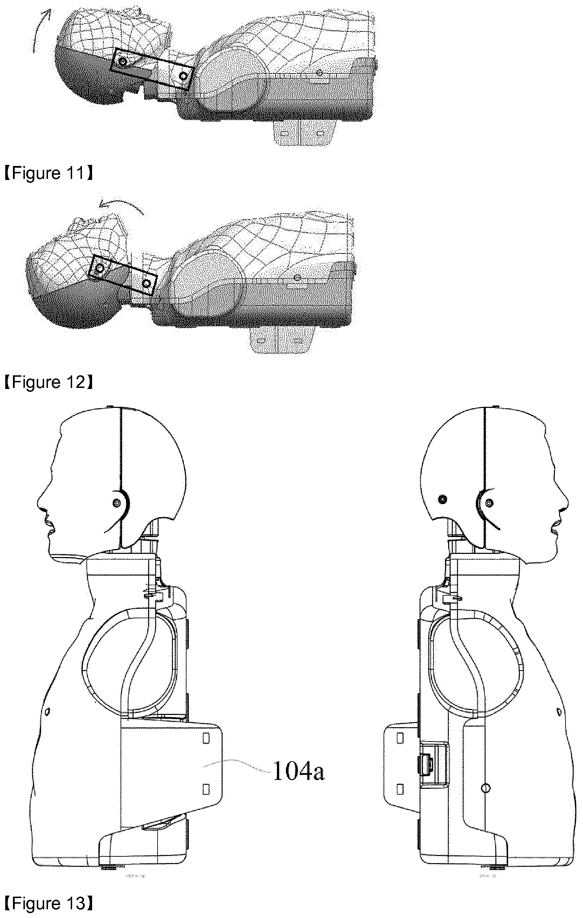

Furthermore, Figure 9 is a side view showing the connection of the neck-joint. Figures 10 and 11 are side views showing head position changes with pivoting of the neck-joint.

The torso and head of the mannequin 100 of the present disclosure combine to make a movement in a similar manner to a human joint. The torso and head are connected via a neck-joint 120. At each of both ends of the neck-joint 120, there is mounted a respective pivot-shaft.

A first pivot shaft 120a is provided at a position where the neck-joint 120 meets the torso, while a second pivot shaft 120b is provided at a position where the joint 102 meets the head. The first pivot shaft 120a and the second pivot shaft 120b are disposed at the lower and upper positions of the mannequin 100, respectively. Thus, the head can pivot in the up and down direction with respect to the torso.

Since the first pivot shaft 120a is provided at a position where the neck-joint 120 and the torso meet with each other, the head and neck-joint combination performs a pivot motion in a certain angle range up and down with respect to the torso. Further, since the second pivot shaft is installed at a position where the neck-joint 120 and the head meet with each other, the torso and neck-joint combination pivotally moves in the vertical direction with respect to the head. However, while the torso is placed on the floor, the cardiopulmonary resuscitation operation is performed. Thus, in practice, the head and neck-joint 120 pivot about the first pivot-shaft 120a, and the head pivots about the second pivot-shaft 120b.

In a real cardiopulmonary resuscitation, to ensure adequate airway, the operator lifts the neck 15 degrees forward and then lifts the jaw upward 35 degrees. With the torso and head being connected via the two pivot-shafts, as shown in Figure 10, the operator lifts the neck forward, and the operator lifts the chin up, as shown in Figure 11. With this, the mannequin may be brought into the same state as the human body.

Furthermore, Figure 12 is a perspective view showing the structure of the extension formed on the left side of the torso.

The practitioner must attach, on the upper body, two electrode pads of a shock absorber or defibrillator, which is used to perform cardiopulmonary resuscitation. Ideally, the two electrode pads should be respectively placed near the collarbone of the right shoulder and near the left flank. In this regard, the torso cover 104 used in the mannequin 100 of the present disclosure is provided with an extension 104a that enlarges a region near the left flank. The extension 104a extends from the left flank of the torso cover 104 toward the back. As a result, the trainee can easily identify the position of the electrode pad.

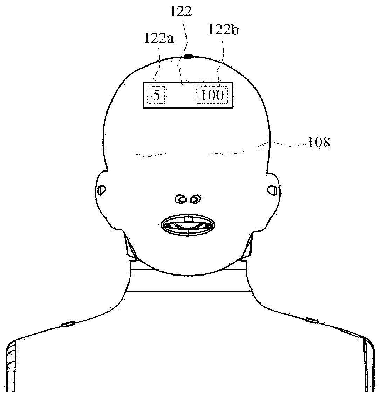

Furthermore, Figure 13 is a conceptual diagram showing the structure of the display installed in the head.

The trainee should indicate the depth and count of cardiac compression and inform the trainee that he/she is performing the correct operation. This notification employs both audio and video simultaneously.

At the bottom of the torso case 102, a power switch 124, an audio switch 126, a press-rate display button 130, and a speaker 128 are disposed.

The power switch 124 is a switch for turning on/off the electric devices included in the mannequin 100. The audio switch 126 is a switch for outputting guidance by voice. The press-rate display button 130 allows the sound to be output at regular intervals through the speaker 128.

A display 122 is provided on the head (preferably the forehead part) to display the state of the pressing operation as an image. When the trainee turns on the power switch 124, the controller activates the internal devices and begins the training process of cardiopulmonary resuscitation. When the audio switch 126 is turned on, the guidance of the operation of the cardiopulmonary resuscitation is outputted via voice. Depending on the choice of trainee, the trainee may turn off the audio switch 126 and proceed with the exercises.

When the trainee turns on the press-rate display button 130, the control unit outputs the sound regularly at a cycle corresponding to the compression count of the cardiopulmonary resuscitation. That is, when a standard compression rate is 100 pressures per minute, 100 sounds per minute will be output through the speaker 128, in a similar manner to the metronome. Thus, the trainee may press more accurately according to the regularly outputted voice.

The display 122 displays the action of heart compression in numbers, letters, figures, colors, brightness, and the like. Depth display 122a and count display 122b are defined according to the present disclosure.

The depth display 122a indicates the minimum depth to be pressed when the heart is pressed. The count display 122b displays the press-rate or count per unit time of the currently performed heart compression.

Depth display 122a and count display 122b may represent the exact depth or count of the heart pressure currently being performed, but the present invention is not so limited. When the specified rule is met, preset numbers or characters may be turned on

For example, the depth display 122a displays a number" 5", and the count display 122b displays a number "100" as the preset number. When the pressing depth calculated by the control section is 5 cm or more, the number of the depth display 122a is normally displayed. When the pressing depth calculated by the control section is less than 5 cm, the number of the depth display 122a is displayed abnormally. For example, the number is displayed in green in normal cases. If it is abnormal, the number may be displayed in red in a blinking fashion. Further, in the normal case, the number may be relatively brighter, while if it is abnormal, the number may be made darker. Furthermore, normal and abnormal cases may be distinguished from each other by changing the size of a character or number, or a change in a displayed range thereof.

The count display 122b may also be configured to display the normal case and the abnormal case differently. This allows the trainee to easily identify normal and abnormal cases.

For pressure depths or counts per unit time, the individual pressing actions may be analyzed each time and the analysis results may be displayed, but the invention is not so limited. The control unit may collectively collect the depths of the actions performed for a predetermined time period and calculates the average thereof. That is, when the depths of the compressions as performed for a few seconds may be different each time, but the average compression depth during the time period is equal to or less than the specified value, the control unit may determine that this is a normal case. The control unit may collectively collect the counts of the actions performed for a predetermined time period and calculates the average thereof. That is, the average of the count of the compressions as performed for a certain period may be calculated. When the average compression count during the time period is equal to or less than the specified value, the control unit may determine that this is a normal case.

It will be appreciated that although the preferred embodiments of the present disclosure have been described above with reference to the accompanying drawings, the technical idea of the present disclosure as described above may be practiced by those skilled in the art to which the present disclosure pertains in other specific forms without departing from essential characteristics of the present disclosure. It is, therefore, to be understood that the embodiments as described above are to be considered in all respects only as illustrative and not restrictive. The scope of the present disclosure is defined by the appended claims rather than the above description. All changes or modifications that come within the meaning and range of equivalency of the claims, and equivalents thereof, are to be construed as being included within the scope of the present disclosure.

## Claims

1. A mannequin device for cardiopulmonary resuscitation training, the device comprising:
a torso case 102 having an open top and an inner space defined therein;
a torso cover 104 constructed to cover the open top of the torso case 102;
a head case 106 connected to the torso case 102, wherein the head case has an inner space defined therein and an open top;
a head cover 108 constructed to cover the open top of the head case 106;
a spring 110 installed on an inner bottom face of the torso case 102 to exert an elastic force to the torso cover to lift the torso cover 104 upward;
a first column 112 installed on the inner bottom face of the torso case 102, wherein the first column is provided with a first sensor 112a for sensing a magnetic force;
a second column 114 installed on the inner bottom face of the torso case 102, wherein the second column is provided with a second sensor 114a for sensing a magnetic force, wherein the second sensor 114a is installed at a lower height than the first sensor 112a;
a pivoting arm 118 installed on the inner bottom face of the torso case 102, wherein the arm 118 has a distal end pivoting in a reciprocating manner in a vertical direction, wherein the arm 118 has a magnet 118a installed at the distal end thereof; and
a display 122 installed in the head, wherein the display 122 is configured to display one or more of letters, numbers, and graphics, or to change color, brightness, size, and display area of at least one of the characters, numbers, and graphics;
wherein the magnet 118a pivots in a reciprocating manner in a vertical direction by a certain angle between the first column 112 and the second column 114,
wherein each of the first sensor 112a and the second sensor 114a is configured to detect a magnetic force when the magnet 118a pivots up and down,
wherein the display 122 includes:
a depth display 122a indicative of a minimum depth to be depressed during cardiac compression; and
a count display 122b indicating a press-rate or count per unit time of currently performed cardiac compressions.

2. The mannequin device of claim 1, wherein the device further comprises a neck-joint 120 connecting the torso case 102 and the head case 106 with each other, wherein the neck-joint 120 is pivotably mounted about a first pivot-shaft 120a and a second pivot-shaft 120b,
wherein the neck-joint 120 is pivotable with respect to the torso case 102 about the first pivot-shaft 120a,
wherein the neck-joint 120 is pivotable with respect to the head case 106 about the second pivot-shaft 120b.

3. The mannequin device of claim 1, wherein the device further comprises a control unit, wherein when, during pivoting movement of the pivoting arm 118 via pressing of the torso cover, the magnet 118a is lowered down and then passes by the first sensor 112a and the second sensor 114a and then move upwards again and then pass by the first sensor 112a, the control unit determines that the pressing operation is normal and indicates on the display 122 that the pressure operation is normal.

## Patentansprüche

1. Puppenvorrichtung zum Trainieren der Herz-Lungen-Wiederbelebung, wobei die Vorrichtung Folgendes umfasst:
ein Torsofach (102) mit einer offenen Oberseite und einem darin definierten Innenraum;
eine Torsoabdeckung (104), die dafür ausgelegt ist, die offene Oberseite des Torsofachs (102) abzudecken;
ein Kopffach (106), das mit dem Torsofach (102) verbunden ist, wobei das Kopffach einen darin definierten Innenraum und eine offene Oberseite aufweist;
eine Kopfabdeckung (108), die dafür ausgelegt ist, die offene Oberseite des Kopffachs (106) abzudecken;
eine Feder (110), die auf einer inneren Bodenfläche des Torsofachs (102) angebracht ist, um eine Federkraft auf die Torsoabdeckung auszuüben, um die Torsoabdeckung (104) nach oben zu heben;
eine erste Säule (112), die auf der inneren Bodenfläche des Torsofachs (102) angebracht ist, wobei die erste Säule mit einem ersten Sensor (112a) zum Erfassen einer magnetischen Kraft versehen ist;
eine zweite Säule (114), die auf der inneren Bodenfläche des Torsofachs (102) angebracht ist, wobei die zweite Säule mit einem zweiten Sensor (114a) zum Erfassen einer magnetischen Kraft versehen ist, wobei der zweite Sensor (114a) in einer geringeren Höhe als der erste Sensor (112a) angebracht ist;
einen Schwenkarm (118), der auf der inneren Bodenfläche des Torsofachs (102) angebracht ist, wobei der Arm (118) ein distales Ende aufweist, das auf hin- und hergehende Weise in einer vertikalen Richtung schwenkt, wobei der Arm (118) einen Magneten (118a) aufweist, der am distalen Ende davon angebracht ist; und
eine Anzeige (122), die im Kopf angebracht ist, wobei die Anzeige (122) dafür eingerichtet ist, eines oder mehreres von Buchstaben, Zahlen und Grafiken anzuzeigen oder die Farbe, die Helligkeit, die Größe und den Anzeigebereich von wenigstens einem von den Buchstaben, Zahlen und Grafiken zu ändern;
wobei der Magnet (118a) auf hin- und hergehende Weise in einer vertikalen Richtung um einen bestimmten Winkel zwischen der ersten Säule (112) und der zweiten Säule (114) schwenkt,
wobei jeder von dem ersten Sensor (112a) und dem zweiten Sensor (114a) dafür eingerichtet ist, eine magnetische Kraft zu detektieren, wenn der Magnet (118a) auf und ab schwenkt,
wobei die Anzeige (122) Folgendes beinhaltet:
eine Tiefenanzeige (122a), die eine Mindesttiefe anzeigt, die während der Herzkompression niederzudrücken ist; und
eine Zählanzeige (122b), die eine Drückrate oder eine Anzahl der aktuell durchgeführten Herzkompressionen pro Zeiteinheit anzeigt.

2. Puppenvorrichtung nach Anspruch 1, wobei die Vorrichtung ferner ein Halsgelenk (120) umfasst, welches das Torsofach (102) und das Kopffach (106) miteinander verbindet, wobei das Halsgelenk (120) um eine erste Schwenkwelle (120a) und eine zweite Schwenkwelle (120b) schwenkbar montiert ist,
wobei das Halsgelenk (120) in Bezug auf das Torsofach (102) um die erste Schwenkwelle (120a) schwenkbar ist,
wobei das Halsgelenk (120) in Bezug auf das Kopffach (106) um eine zweite Schwenkwelle (120b) schwenkbar ist.

3. Puppenvorrichtung nach Anspruch 1, wobei die Vorrichtung ferner eine Steuerungseinheit umfasst, wobei, wenn während der Schwenkbewegung des Schwenkarms (118) durch Drücken der Torsoabdeckung der Magnet (118a) abgesenkt wird und anschließend den ersten Sensor (112a) und den zweiten Sensor (114a) passiert und sich anschließend wieder aufwärts bewegt und anschließend den ersten Sensor (112a) passiert, die Steuerungseinheit bestimmt, dass der Drückvorgang normal ist und auf der Anzeige (122) anzeigt, dass der Drückvorgang normal ist.

## Revendications

1. Dispositif de mannequin d'apprentissage de réanimation cardio-pulmonaire, le dispositif comprenant :
un caisson de buste (102) ayant un sommet ouvert et un espace interne défini en son sein ;
un couvercle de buste (104) construit pour couvrir le sommet ouvert du caisson de buste (102) ;
un caisson de tête (106) relié au caisson de buste (102), dans lequel le caisson de tête a un espace interne défini en son sein et un sommet ouvert ;
un couvercle de tête (108) construit pour couvrir le sommet ouvert du caisson de tête (106) ;
un ressort (110) installé sur une face de dessous interne du caisson de buste (102) pour exercer une force élastique sur le couvercle de buste afin de soulever le couvercle de buste (104) vers le haut ;
une première colonne (112) installée sur la face de dessous interne du caisson de buste (102), dans lequel la première colonne est munie d'un premier capteur (112a) pour capter une force magnétique ;
une seconde colonne (114) installée sur la face de dessous interne du caisson de buste (102), dans lequel la seconde colonne est munie d'un second capteur (114a) pour capter une force magnétique, dans lequel le second capteur (114a) est installé à une hauteur inférieure au premier capteur (112a) ;
un bras pivotant (118) installé sur la face de dessous interne du caisson de buste (102), dans lequel le bras (118) a une extrémité distale pivotant de manière en va-et-vient dans une direction verticale, dans lequel le bras (118) a un aimant (118a) installé à son extrémité distale ; et
un afficheur (122) installé dans la tête, dans lequel l'afficheur (122) est configuré pour afficher un ou plusieurs parmi des lettres, des nombres, et des éléments graphiques, ou pour changer de couleur, de luminosité, de taille, et de surface d'affichage d'au moins l'un des caractères, nombres, et éléments graphiques ;
dans lequel l'aimant (118a) pivote de manière en va-et-vient dans une direction verticale d'un certain angle entre la première colonne (112) et la seconde colonne (114),
dans lequel chacun du premier capteur (112a) et du second capteur (114a) est configuré pour détecter une force magnétique lorsque l'aimant (118a) pivote vers le haut et le bas,
dans lequel l'afficheur (122) comporte :
un afficheur de profondeur (122a) indicatif d'une profondeur minimale à enfoncer pendant une compression cardiaque ; et
un afficheur de comptage (122b) indiquant une cadence de pression ou un comptage par unité de temps de compressions cardiaques en cours de réalisation.

2. Dispositif de mannequin selon la revendication 1, dans lequel le dispositif comprend en outre une articulation de cou (120) reliant le caisson de buste (102) et le caisson de tête (106) l'un à l'autre, dans lequel l'articulation de cou (120) est montée pivotante autour d'un premier arbre-pivot (120a) et d'un second arbre-pivot (120b),
dans lequel l'articulation de cou (120) peut pivoter vis-à-vis du caisson de buste (102) autour du premier arbre-pivot (120a),
dans lequel l'articulation de cou (120) peut pivoter vis-à-vis du caisson de tête (106) autour du second arbre-pivot (120b).

3. Dispositif de mannequin selon la revendication 1, dans lequel le dispositif comprend en outre une unité de commande, dans lequel lorsque, pendant un déplacement pivotant du bras pivotant (118) via une pression du couvercle de buste, l'aimant (118a) est abaissé, puis passe à côté du premier capteur (112a) et du second capteur (114a), puis se déplace vers le haut à nouveau, puis passe à côté du premier capteur (112a), l'unité de commande détermine que l'opération de pression est normale et indique sur l'afficheur (122) que l'opération de pression est normale.
